# EUROPEAN PATENT SPECIFICATION

(11) **EP 0 396 690 B1**
(45) Date of publication and mention of the grant of the patent: **15.12.1993**
(21) Application number: 89911898.8
(22) Date of filing: 23.10.1989
(51) Int. Cl.: B66B 9/08

(54) **CURVATURE ADJUSTABLE SUPPORT ELEMENT, METHOD FOR MANUFACTURING IT AND A USE OF IT**
STÜTZELEMENT MIT ANPASSBARER KRÜMMUNG, VERFAHREN ZUR HERSTELLUNG UND VERWENDUNG
ELEMENT DE SUPPORT A COURBURE AJUSTABLE, SON PROCEDE DE FABRICATION ET SON MODE D'UTILISATION

(30) Priority: 28.10.1988 NO 884825
(43) Date of publication of application: 14.11.1990
(73) Proprietor: AMECO HAMAR A/S, N-2300 Hamar (NO)
(72) Inventor: HAUGE, Andreas, N-2010 Strommen (NO)
(74) Representative: Wallin, Bo-Göran
(86) International application number: NO8900111
(87) International publication number: WO9004563

(56) References cited:
- DE-B- 1 004 361
- SE-B- 450 890
- US-A- 4 354 575

## Description

The present invention relates to a method for making a support element serving as a track of a stairway lift and to such a support element.

Support elements are known in a plurality of shapes, as beams, profiles and such, made of a number of different materials and a plurality of forms in the longitudinal direction, as straight length as well as in standarized curve shapes. Installation of such elements on places where standarized shapes do not fit, requires special adjustment and adaptation in each specific case, which is time consuming and therefore expensive.

Support elements of the above mentioned type are used in a number of connections, such as internal transportation systems for material handling as well as other types of internal transportation. One special field is concerned with construction of stairway lifts such as lifts specially adapted for wheel chair users. Support elements in this case must be adapted to the specific stairway construction and installation of support elements having standard shapes in many cases may be impossible resulting in constructing elements specially for the specific stairway.

SE 450 890 discloses a stairway lift, comprising a support element, which is secured to the ceiling above the stairway by fastening means which are not shown and described. This document discloses neither how the support element is made nor its structure.

DE 1,004,361 discloses a method of making a banister for a stairway. According to this method, vertical rods are attached to the steps. For the handrail, use is made of a plastic pipe in which holes are formed so that the pipe can be placed on the vertical rods. When the handrail has been fitted, it is filled with foam concrete, thereby increasing its stability.

Thus, DE 1,004,361, concerns the making of a handrail for a banister. This is a different problem from the making of a support element of a stairway lift, since the handrail is not supposed to support large weights. Moreover, the handrail is a support element of standardised shape, which, as stated above, in many cases is impossible to use.

With the support element according to the present invention, a possibility exists to install the support elements corresponding to shapes of the specific stairway as the support element initially is flexible and easily can be secured to the stairway reeling of the stairway wall whereafter the flexible support element is transformed to a rigid support element able to sustain large loads as will be the case in a stairway roll chair lift, especially between the support points on the railing. This is achieved with the method and the support element according to the present invention as defined with the features stated in the claims.

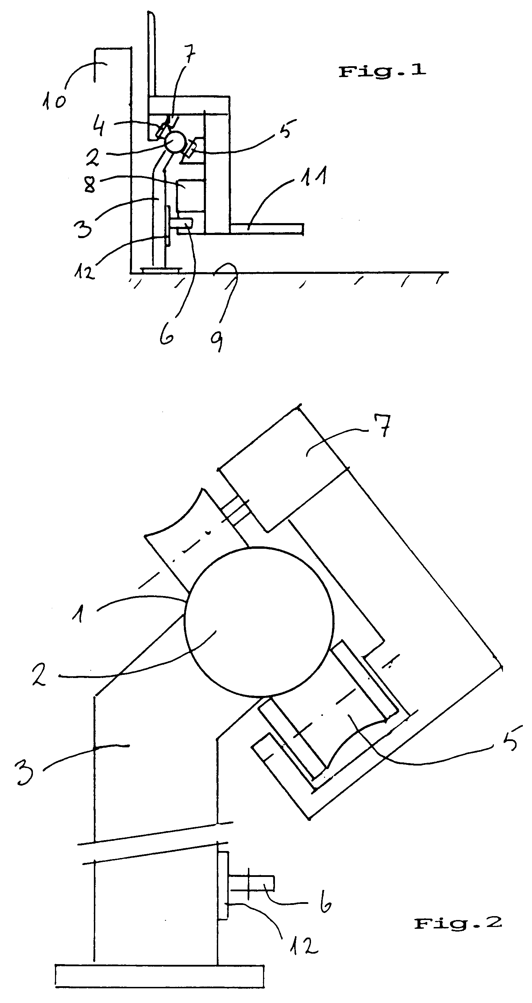

In the drawing, Fig. 1 discloses schematically application for the support element according to the present invention and Fig. 2 discloses in an enlarged scale, the support element in the stairway lift of Fig. 1.

According to the present invention a flexible and corrugated pipe is used as the support element of a stairway lift, which pipe is secured to pillars in the railing of the curvature of the stairway, the pipe thereby following the stairway structure.

Upon installation of the pipe to the pillars, the lower end of the pipe is closed, the pipe is filled with a curable medium, preferably with addition of reinforcement. The curable medium may be an epoxy resin and the reinforcement may be glass fibres. After curing, the medium in the completely filled pipe together with the pipe creates a very strong support element withstanding large loads even between the connection points to the pillars.

In a special embodiment the corrugated pipe is made of stainless steel and has a wave shaped corrugation. The pipe is secured to the pillars of the stairway, whereafter the lower end of the pipe is closed, the pipe is completely filled with epoxy resin on a reinforcement, the resin thereafter is cured. The pipe hereby is transformed into a support element having large strength. The element shape is exactly following the stairway shape. The wave shaped corrugations may be used as tooth bar for moving of the stairway lift.

Fig. 2 discloses the corrugated pipe 1 of stainless steel, filled with the cured mass 2, such as epoxy resin reinforced with glass fibres, completely occupying the internal of the pipe along its entire length. The support element is at spaced apart points secured to pillars 3 which are secured to the stairs 9 of the stairway. The pillars 3 may suitably be arranged near a wall in the stairway or a railing 10.

The lift 11 may comprise a rechargeable electrical battery 8 for operation of an electrical motor 7 connected to a drivegear 4 which meshes in the corrugations of the support element for moving the lift 11 upwards or downwards. The weight of the lift 11 is retained by support rolls 5 of which preferably one is arranged on each side of the drive-gear 4 along the upper side of the support element and one support roll 5 is arranged against the underside of the support element, opposite the drive gear thereby to ensure that the drive gear 4 meshes into the corrugations of support element. When the lift 11 is in the upper or lower position, the battery automatically is connected to a charging device thereby securing that the battery always will have sufficient charge for use.

On the pillars are arranged a continous rail 12 against which a support wheel 6 is abutting, and being connected with the lower portion of the lift. By suitable design of the pillars and the positioning of the support element on the pillars 3, as disclosed in Fig. 2, the drive gear 4 and the support roll 1 may be arranged in a bevelled position to go free of the pillars 3 when the lift is descending or ascending material.

By suitable choice of the support element, the corrugated pipe may be arranged in a curvature without influencing the corrugations such that the meshing of the drivegear 4 in the corrugations is secured. Furthermore other materials may be used as reinforcement, such as internal steel band along the entire length of the pipe.

## Claims

1. A method for making a support serving as a track (12) of a stairway lift in a stairway (9), including the steps of
- securing a flexible, corrugated pipe (1), at intervals to the stairway while adapting the shape of the pipe to that of the stairway,
- closing the lower end of the pipe,
- filling, from the upper end of the pipe, a curable medium until the entire interior of the pipe is filled with the medium, and
- allowing the medium to cure.

2. Support element, which serves as a track (12) of a stairway lift, comprising a pipe (1) having an upper and lower end at different heights, **characterized** in that the pipe (1) is secured to a stairway (9) at intervals and is filled with a cured medium (2), so that it is sturdy also between the points (3) at which it is secured to the stairway, said pipe being a flexible, corrugated pipe, the shape of which has been adapted to that of the stairway and the corrugations of which serve as a toothed rod for the driving of the lift.

3. Support element according to claim 2, **characterized** in that the curable medium is epoxy resin.

4. Support element according to claim 2 or 3, **characterized** in that the cured medium comprises a reinforcement.

5. Support element according to claim 4, **characterized** in that the reinforcement is glass fibres.

6. Support element according to any one of claims 2-5, **characterized** in that the pipe is made of stainless steel having a wave-shaped corrugation.

## Patentansprüche

1. Verfahren zum Herstellen eines Tragelements, das als Führungsbahn (12) eines Treppenlifts auf einer Treppe (9) dient, mit folgenden Verfahrensschritten:
- Befestigen eines flexiblen, gewellten Rohres (1) in Abständen an einer Treppe, wobei die Form des Rohres an die der Treppe angepaßt wird,
- Verschließen des unteren Endes des Rohres,
- Einfüllen eines härtbaren Mittels vom oberen Ende des Rohres aus so weit, bis das gesamte Rohrinnere mit dem Mittel gefüllt ist und
- Aushärten des Mittels.

2. Tragelement, das als Führungsbahn (12) für einen Treppenlift dient und ein Rohr (1) umfaßt, das ein oberes und ein unteres Ende hat, die auf verschiedenen Höhen angeordnet sind,
dadurch **gekennzeichnet,** daß das Rohr (1) an der Treppe (9) in Abständen befestigt und mit einem ausgehärteten Mittel (2) gefüllt ist, so daß es auch zwischen den Punkten (3) steif und fest ist, an denen es an der Treppe befestigt ist, wobei das Rohr ein flexibles, gewelltes Rohr ist, dessen Form an die der Treppe angepaßt worden ist und dessen Wellungen als Zahnstange für den Antrieb des Lifts dienen.

3. Tragelement nach Anspruch 2, dadurch gekennzeichnet, daß das härtbare Mittel ein Epoxyharz ist.

4. Tragelement nach einem der Ansprüche 2 oder 3, dadurch gekennzeichnet, daß das gehärtete Mittel eine Verstärkung enthält.

5. Tragelement nach Anspruch 4, dadurch gekennzeichnet, daß das Verstärkungsmittel aus Glasfasern besteht.

6. Tragelement nach einem der Ansprüche 2 bis 5, dadurch gekennzeichnet, daß das Rohr aus rostfreiem Stahl besteht, das wellenförmige Wellungen aufweist.

## Revendications

1. Procédé de fabrication d'un support servant de rail (12) pour un monte-personne d'escalier dans un escalier (9), comprenant les phases consistant à :
- fixer un tube flexible ondulé (1) à intervalles à l'escalier en adaptant la forme du tube à celle de l'escalier,
- fermer l'extrémité inférieure du tube,
- introduire un milieu durcissable par l'extrémité supérieure du tube jusqu'à ce que la totalité du volume intérieur du tube soit rempli du milieu, et
- laisser le milieu durcir.

2. Elément support, qui sert de rail (12) pour un monte-personne d'escalier, comprenant un tube (1) ayant une extrémité supérieure et une extrémité inférieure situées à des niveaux différents, caractérisé en ce que le tube (1) est fixé à un escalier (9) à intervalles et est rempli d'un milieu durci (2), de sorte qu'il est robuste, même entre les points (3) au droit desquels il est fixé à l'escalier, ledit tube étant un tube flexible ondulé dont la forme a été adaptée à celle de l'escalier et dont les ondulations servent de crémaillère pour l'entraînement du monte-personne.

3. Elément support selon la revendication 2, caractérisé en ce que le milieu durcissable est une résine époxy.

4. Elément support selon la revendication 2 ou 3, caractérisé en ce que le milieu durci comprend un renforcement.

5. Elément support selon la revendication 4, caractérisé en ce que le renforcement est composé de fibres de verre.

6. Elément support selon une quelconque des revendications 2 à 5, caractérisé en ce que le tube est fait d'acier inoxydable possédant une ondulation en forme d'onde.
